# EUROPÄISCHE PATENTSCHRIFT

(11) **EP 3 140 171 B1**
(45) Veröffentlichungstag und Bekanntmachung des Hinweises auf die Patenterteilung: **23.09.2020**
(21) Anmeldenummer: 15715169.7
(22) Anmeldetag: 11.04.2015
(51) Int. Cl.: B60T 13/68, B60T 15/02

(54) **PNEUMATISCHE BREMSEINRICHTUNG FÜR KRAFTFAHRZEUGE UND VERFAHREN ZUM BETRIEB EINER PNEUMATISCHEN BREMSEINRICHTUNG**
PNEUMATIC BRAKE SYSTEM FOR VEHICLES AND METHOD TO APPLY A PNEUMATIC BRAKE SYSTEM
SYSTÈME PNEUMATIQUE DE FREINS POUR VÉHICULE ET PROCÉDÉ D'APPLICATION D'UN TEL SYSTÈME

(30) Priorität: 08.05.2014 DE 102014006614
(43) Veröffentlichungstag der Anmeldung: 15.03.2017
(73) Patentinhaber: WABCO GmbH, 30453 Hannover (DE)
(72) Erfinder: LÜLFING, Ralph-Carsten, 30826 Garbsen (DE); OTREMBA, Robert, 30952 Ronnenberg (DE); STRACHE, Wolfgang, 30966 Hemmingen (DE)
(74) Vertreter: Lauerwald, Jörg
(86) Internationale Anmeldenummer: PCT/EP2015/000762
(87) Internationale Veröffentlichungsnummer: WO 2015/169417

(56) Entgegenhaltungen:
- EP-A1- 2 077 215
- DE-A1-102010 010 606
- DE-A1-102010 050 578

## Beschreibung

Die Erfindung betrifft eine pneumatische Bremseinrichtung für Kraftfahrzeuge gemäß dem Oberbegriff des Anspruchs 1. Die Erfindung betrifft außerdem ein Verfahren zum Betrieb einer pneumatischen Bremseinrichtung für Kraftfahrzeuge gemäß dem Oberbegriff des Anspruchs 10.

Pneumatische Bremseinrichtungen für Kraftfahrzeuge weisen üblicherweise pro Rad des Kraftfahrzeugs eine pneumatisch betätigbare Radbremse auf, wobei das pneumatische Betriebsmittel für die Radbremsen in einem Vorratsdruckspeicher unter statischem Druck bereit gestellt ist. Die Bremseinrichtungen weisen einen Bremssignalgeber auf, welcher an die Bewegung eines vom Fahrer des Kraftfahrzeugs betätigbaren Bremspedals gekoppelt ist und bei Betätigung des Bremspedals ein Bremsanforderungssignal erzeugt. In Abhängigkeit des Bremsanforderungssignals wird ein Bremssolldruck an den Radbremsen eingestellt.

EP 2 077 215 A1 offenbart eine derartige pneumatische Bremseinrichtung für Kraftfahrzeuge, wobei es jeweils ein elektrisch ansteuerbares Radbremsmodul pro Rad zur Einstellung des Soll-Bremsdrucks der jeweiligen Radbremse aufweist. Eine elektronische Steuereinheit ermittelt dabei Vorgabewerte der Soll-Bremsdrücke für die Radbremsen unter Berücksichtigung des Bremssignalgebers, wobei die Vorgabewerte der Soll-Bremsdrücke den Radbremsmodulen vorgegeben werden. Die bekannte pneumatische Bremseinrichtung sieht sowohl Ausführungsbeispiele mit einem gemeinsamen Radbremsmodul für beide Radbremsen einer Achse vor, als auch ein Ausführungsbeispiel, bei der die Räder einer Achse jeweils mit einem Radbremsmodul ausgestattet sind.

Die Radbremsmodule umfassen dabei wenigstens ein Belüftungsventil und ein Entlüftungsventil, wobei das Belüftungsventil zur Aktivierung der Radbremse betätigt wird. Beispielsweise zur Beendigung des Bremsvorgangs wird der Bremszylinder der Radbremse entlüftet, wobei das Entlüftungsventil betätigt wird und der Bremszylinder ins Freie entlüftet wird. Zur Aktivierung des Belüftungsventils und/oder des Entlüftungsventils umfassen Radbremsmodule elektrisch betätigbare Aktivierungsmittel, welche von einer Steuerlogik über ein Stellsignal ansteuerbar sind. Zur Betätigung des Radbremsmoduls umfasst die Steuerlogik Mittel zur Erzeugung eines Stellsignals für das Aktivierungsmittel entsprechend dem Vorgabewert für den Soll-Bremsdruck.

Bei den bekannten Bremseinrichtungen sind sowohl für die Belüftung als auch für die Entlüftung Relaisventile vorgesehen, wodurch der Steuerdruck zur Betätigung der Ventile, insbesondere des Belüftungsventils, entkoppelt wird vom Betriebsdruck der Radbremsen.

DE 10 2010 010 606 A1 offenbart eine Drucksteuervorrichtung einer Druckmittel-Bremsanlage eines Fahrzeugs zum radindividuellen Steuern von Bremsdrücken in Bremszylindern von Rädern einer Achse. Jeder Fahrzeugseite ist ein 2/2-Wegeventil zugeordnet, welches abhängig von seiner Stellung den Zugang zum Bremszylinder sperrt. Jedes 2/2-Wegeventil ist mit einem der Arbeitsanschlüsse eines Relaisventils der bekannten Drucksteuervorrichtung verbunden, wobei ein Vorratsanschluss mit Vorratsdruck versorgt ist und ein Entlüftungsanschluss mit einer Drucksenke in Verbindung steht. Der Steueranschluss des Relaisventils ist mittels eines 3/2-Wege-Magnetventil oder einer Ventileinrichtung mit zwei 2/2-Wegeventilen, welche vom Steuergerät steuerbar sind, nach Bedarf entweder mit einem Bremssteuerdruck, mit einem Vorratsdruck oder mit einer Drucksenke verbindbar.

Der Erfindung liegt die Aufgabe zugrunde, die Herstellungskosten und die Baugröße der pneumatischen Bremseinrichtung mit Radbremsmodulen für beide Räder einer Achse eines Kraftfahrzeugs zu verringern.

Diese Aufgabe wird erfindungsgemäß durch eine pneumatische Bremseinrichtung mit den Merkmalen des Anspruchs 1 gelöst. Die Aufgabe wird außerdem durch ein Verfahren zum Betrieb einer pneumatischen Bremsanlage mit den Merkmalen des Anspruchs 11 gelöst.

Erfindungsgemäß sind das Belüftungsventil und sein Aktivierungsmittel derart ausgebildet, dass der pneumatische Druck aus dem Vorratsdruckspeicher im betätigten Zustand des Belüftungsventils direkt an die jeweilige Radbrem-se durchsteuerbar ist. Alternativ oder zusätzlich sind das Entlüftungsventil und sein Aktivierungsmittel derart ausgebildet, dass der Bremsdruck der Radbremse im betätigten Zustand des Entlüftungsventils direkt in die Atmosphäre entlüftet wird. Werden aus Kostengründen anstelle eines gemeinsamen Radbremsmoduls für beide Räder einer Achse getrennte Radbremsmodule vorgesehen, so werden durch die erfindungsgemäße Durchsteuerung des pneumatischen Drucks aus dem Vorratsdruckspeicher direkt zur jeweiligen Radbremse mehrere der bisher erforderlichen Relaisventil erfindungsgemäß ersetzt. Auf diese Weise kann die Baugröße der Bremseinrichtung und durch die Reduzierung von Bauteilen auch die Herstellungskosten reduziert werden.

Unter der Durchsteuerung des pneumatischen Drucks aus dem Vorratsdruckspeicher ist zu verstehen, dass bei Öffnung des Belüftungsventils der pneumatische Druck aus dem Vorratsdruckspeicher unmittelbar auf die Radbremse beziehungsweise den in der Radbremse ausgebildeten pneumatischen Zylinder wirkt. Die Betätigung des Belüftungsventils seinerseits erfolgt durch elektrisch betätigbare Aktivierungsmittel.

In einer vorteilhaften Ausführungsform umfasst das Aktivierungsmittel des Belüftungsventils ein elektrisch betätigbares Belüftungs-Vorsteuerventil, mittels dem das Belüftungsventil betätigbar ist. Das Vorsteuerventil öffnet bei elektrischer Betätigung und schaltet in einer bevorzugten Ausführungsform der Erfindung den pneumatischen Druck im Vorratsdruckspeicher auf das Betätigungsglied des Belüftungsventils, wodurch das pneumatisch betätigt öffnet. Das Belüftungsventil und sein elektrisch betätigbares Belüftungs-Vorsteuerventil bilden eine Belüftungsventilgruppe, bei welcher der pneumatische Druck aus dem Vorratsdruckspeicher mittelbar zur Betätigung des Belüftungsventils herangezogen wird, jedoch der pneumatische Druck dennoch unmittelbar zur Radbremse durchgeschaltet wird. In einer weiteren vorteilhaften Ausführungsform der Erfindung ist auch das Aktivierungsmittel des Entlüftungsventils mit einem elektrisch betätigbaren Entlüftungs-Vorsteuerventil ausgestattet, mittels dem das Entlüftungsventil betätigbar ist. Das Belüftungs-Vorsteuerventil beziehungsweise das Entlüftungs-Vorsteuerventil ist in einer vorteilhaften Ausführungsform als elektrisch betätigbares Magnetventil ausgebildet.

Weitere vorteilhafte Ausführungsformen der Erfindung ergeben sich mit anderen elektrisch betätigbaren Aktivierungsmitteln als die erwähnten Vorsteuerventile, beispielsweise einen elektrischen Schrittmotor oder elektrische Ventile anderer Bauart als das Magnetventil.

Ein rascher Druckaufbau im Bremszylinder wird erreicht, wenn die Steuerlogik des Radbremsmoduls Mittel zur Erzeugung eines pulsmodulierten Stellsignals für das elektrische Aktivierungsmittel, insbesondere das Belüftungs-Vorsteuerventil umfasst. Unter einem pulsmodulierten Signal wird dabei eine zeitdiskrete Signalfolge bestehend aus einzelnen Pulsen verstanden, wobei das Aktivierungsmittel entsprechend der zeitdiskreten Signalfolge für jeweils kurze Intervalle ein- und ausgeschaltet wird. In der Ausführungsform des Aktivierungsmittels als Vorsteuerventil wird das Vorsteuerventil mit dem pulsmodulierten Stellsignal der Steuerlogik in rascher Folge ein- und ausgeschaltet, wobei durch ein geeignetes Pulsschema der Modulation ein rascher Druckaufbau in der Radbremse erreicht wird. In der Ausführungsform der Erfindung einer Entlüftungsventilgruppe mit einem Entlüftungsventil und einem elektrisch betätigbaren Aktivierungsmittel wird das Aktivierungsmittel des Entlüftungsventils entsprechend der Ansteuerung des Belüftungsventils ebenfalls mit einem pulsmodulierten Stellsignal gesteuert.

Bei Bremsmanövern des Kraftfahrzeugs kann es aus unterschiedlichen Gründen zu einem Schiefziehen des Kraftfahrzeugs kommen, beispielsweise unterschiedliche Bremsbeläge. Auch können die Radbremsen beider Räder ein unterschiedliches Ansprechverhalten auf den Bremswunsch zeigen. Beispielsweise können schon geringfügig unterschiedliche Geometrien, beispielsweise bereits Unterschiede im Rahmen von Fertigungstoleranzen, der pneumatisch beteiligten Bauteile zu unterschiedlichem Ansprechverhalten der Bremssysteme beider Räder führen. Besonders vorteilhaft wird daher der Steuerlogik jedes Radbremsmoduls ein im Voraus für das jeweilige Radbremsmodul ermitteltes Kennfeld zugeordnet, welches Informationen zu zeitdiskreten Signalfolgen für das Stellsignal in Abhängigkeit von Soll-Bremsdrücken umfasst. Die Ermittlung eines individuellen Kennfelds für jedes Radbremsmodul berücksichtigt geringfügige Unterschiede, beispielsweise geometrische Unterschiede im gesamten Volumen der Ventilbaugruppe einschließlich gegebenenfalls des Bremszylinders und umfasst optimierte Signalfolgen beziehungsweise Pulsschemata für ein individuelles Radbremsmodul, bei denen sich ein schnellstmöglicher Soll-Bremsdruck aufbaut. Dabei werden für verschiedene Soll-Bremsdrücke optimierte Pulsschemata beziehungsweise zeitdiskrete Signalfolgen für das pulsmodulierte Stellsignal ermittelt und beispielsweise in einem Speicherelement der Steuerlogik zur Verfügung gestellt. Das Radbremsmodul wird daher vor der ersten Inbetriebnahme bei der Ermittlung des Kennfelds mit optimalen zeitdiskreten Signalfolgen in Abhängigkeit von Soll-Bremsdrücken quasi eingelernt.

Vorteilhaft ist die Steuerlogik für die Aktivierungsmittel als Regelkreis zur Einregelung des Soll-Bremsdrucks ausgebildet, welcher das Sensorsignal eines Drucksensors in einer Druckmittelleitung zwischen den Belüftungsventil und der Radbremse als Ist-Bremsdruck berücksichtigt. Als Stellgröße zur Anpassung des Ist-Bremsdrucks an den gewünschten Soll-Bremsdruck wird das Pulsschema des pulsmodulierten Stellsignals variiert. Besonders vorteilhaft werden pulsweiten modulierte Stellsignale erzeugt, wobei durch die Variation der Pulsweite die Charakteristik des Druckaufbaus beeinflusst werden kann. So wird beispielsweise durch eine Verlängerung der Pulsweite, das heißt der zeitlichen Dauer des Intervalls, während dem das Aktivierungsmittel betätigt ist, in der Regel ein steilerer Gradient des Druckaufbaus erreicht.

In einer weiteren vorteilhaften Ausführungsform ist ein überlagerter Regelkreis zur Berechnung und Anpassung der Vorgabewerte für den Soll-Bremsdruck unter Berücksichtigung einer laufend ermittelbaren Fahrzustandsgröße vorgesehen. Der überlagerte Regelkreis dient dabei der Anpassung des vorgegebenen Soll-Bremsdrucks an das konkrete Fahrverhalten des Fahrzeugs, wodurch einem Schiefziehen des Fahrzeugs bei einem Bremsvorgang entgegen gewirkt ist. Eine Neigung des Fahrzeugs zum Schiefziehen wird durch die Berücksichtigung der laufend ermittelten Fahrzustandsgröße erkannt und durch entsprechende Einregelung beziehungsweise Anpassung der Soll-Bremsdrücke für die unterschiedlichen Radbremsmodule entgegengewirkt. Der überlagerte Regelkreis zur Berechnung und Anpassung der Vorgabewerte für den Soll-Bremsdruck passt somit den Soll-bremsdruck, wie er entsprechend der Betätigung des Bremssignalgebers zunächst ermittelt wurde, an die gegebenenfalls zum Schiefziehen neigenden Umstände an.

In einer vorteilhaften Ausführungsform berücksichtigt ein überlagerter Regelkreis eine gemessene Raddrehzahl als Fahrzustandsgröße. Weichen die gemessenen Raddrehzahlen der beiden Räder, denen die Radbremsmodule zugeordnet sind, voneinander ab, so kann auf eine Neigung zum Schiefziehen geschlossen werden. Der überlagerte Regelkreis passt die Vorgabewerte für den Soll-Bremsdruck der jeweiligen Radbremsmodule an.

In einer weiteren vorteilhaften Ausführungsform ist ein überlagerter Regelkreis vorgesehen, welcher eine Gierrate des Kraftfahrzeugs als Fahrzustandsgröße berücksichtigt. In weiteren Ausführungsformen der Erfindung sind mehrere überlagerte Regelkreise zur Berechnung und in Anpassung der Vorgabewerte für den Soll-Bremsdruck vorgesehen, wodurch der Vorgabewert, aus welchem das pulsmodulierte Stellsignal berechnet wird, weiter optimiert wird. Geeignete Fahrzustandsgrößen können beispielsweise aus den Steuergeräten von Fahrassistenzsystemen zur Verfügung gestellt werden.

Das Kraftfahrzeug mit der erfindungsgemäßen Bremseinrichtung ist vorzugsweise ein Lastkraftfahrzeug, beispielsweise Zugmaschinen oder Omnibusse.

Ausführungsbeispiele der Erfindung sind nachstehend anhand der Zeichnung näher erläutert. Es zeigen:
Fig. 1 einen elektrischen und pneumatischen Schaltplan eines Ausführungsbeispiels einer pneumatischen Bremsanlage,
Fig. 2 ein elektrisches und pneumatisches Schaltbild eines Ausführungsbeispiels eines Radbremsmoduls,
Fig. 3 ein zeitlicher Verlauf eines Ausführungsbeispiels eines pulsweit modulierten Stellsignals,
Fig. 4 einen zeitlichen Verlauf eines pulsweitenmodulierten Stellsignals mit erhöhter Pulsweite,
Fig. 5 einen zeitlichen Verlauf eines pulsweitenmodulierten Stellsignals mit reduzierter Pulsweite,
Fig. 6 einen grafischen Verlauf des Druckanstiegs an der Radbremse für unterschiedliche Pulsweiten,
Fig. 7 ein Blockschaltbild eines Ausführungsbeispiels eines Verfahrens zum Betrieb einer pneumatischen Bremsanlage.

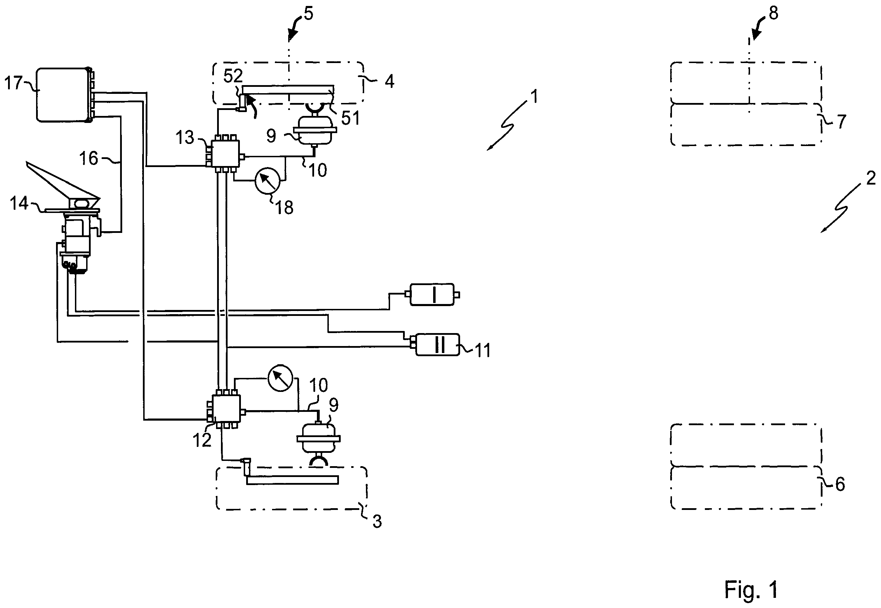

Fig. 1 zeigt schematisch einen Ausschnitt einer pneumatischen Bremseinrichtung 1 für Kraftfahrzeuge, nämlich ein zweiachsiges Lastkraftfahrzeug 2. Von dem Lastkraftfahrzeug 2 sind in der schematischen Darstellung ein linkes Vorderrad 3 und ein rechtes Vorderrad 4 an einer Vorderachse 5 sowie ein linkes Hinterrad 6 und ein rechtes Hinterrad 7 an einer Hinterachse 8 gezeigt.

Die pneumatische Bremseinrichtung 1 umfasst pro Rad 3, 4, 6, 7 eine pneumatische Radbremse 9. Die Radbremsen 9 weisen jeweils einen Bremszylinder auf, welcher über eine Druckmittelleitung 10 mit Bremsdruck beaufschlagbar ist, um die Radbremse 9 zu aktivieren. Zur Bereitstellung von Bremsdruck beziehungsweise unter statischem Druck stehender Druckluft umfasst die pneumatische Bremseinrichtung 1 einen oder mehrere Vorratsdruckspeicher 11. In der fluidischen Verbindung zwischen dem Vorratsdruckspeicher 11 und der Druckmittelleitung 10 zur jeweiligen Radbremse 9 ist ein elektrisch ansteuerbares Radbremsmodul 12, 13 angeordnet, welches im nachstehend noch näher beschriebener Weise den Aufbau von Bremsdruck in der jeweiligen Radbremse 9 beeinflusst. Dabei ist jedem Rad 3, 4 der Vorderachse 5 jeweils ein Radbremsmodul 12, 13 zugeordnet. Entsprechend beeinflusst ein erstes Radbremsmodul 12 das Bremsverhalten des linken Vorderrads 3, während ein zweites Radbremsmodul 13 das Bremsverhalten des rechten Vorderrads 4 beeinflusst.

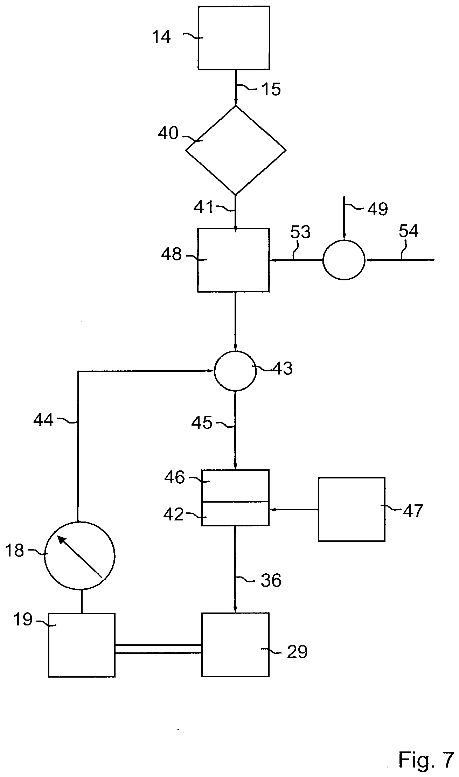

Die Bremseinrichtung 1 umfasst außerdem einen Bremssignalgeber 14, welcher bevorzugt ein Pedal in der Kabine des Fahrerhauses des Kraftfahrzeugs 2 aufweist und durch einen Fahrer bedienbar ist. Der Bremssignalgeber 14 erzeugt bei Betätigung des Pedals ein Bremssignal 15 (Fig. 7), welches den Bremswunsch des Fahrers repräsentiert. Zur Übertragung des Bremssignals 15 ist der Bremssignalgeber 14 über eine Bremssignalleitung 16 signalübertragend mit einer elektronischen Steuereinheit 17 verbunden. Die elektronische Steuereinheit 17 ist dazu ausgebildet, Vorgabewerte von Soll-Bremsdrücken der Radbremsen 9 unter Berücksichtigung des Bremssignalgebers 14 zu ermitteln. Die elektronische Steuereinheit 17 ist signalübertragend sowohl mit dem ersten Radbremsmodul 12 für das linke Vorderrad 3 als auch mit dem zweiten Radbremsmodul 13 für das rechte Vorderrad 4 verbunden.

Jeder Radbremse 9 ist ein Drucksensor 18 zugeordnet, welcher den aktuellen Ist-Bremsdruck in der jeweiligen Radbremse 9 ermittelt. Jedes Radbremsmodul 12, 13 zieht den aktuellen Ist-Bremsdruck ihrer jeweiligen Radbremse 9 zur Einregelung eines bestimmten Soll-Bremsdrucks heran. Der Drucksensor 18 ist signalübertragend mit dem jeweiligen Radbremsmodul 12, 13 verbunden und kann auch baulich mit dem jeweiligen Radbremsmodul 12, 13 vereinigt sein.

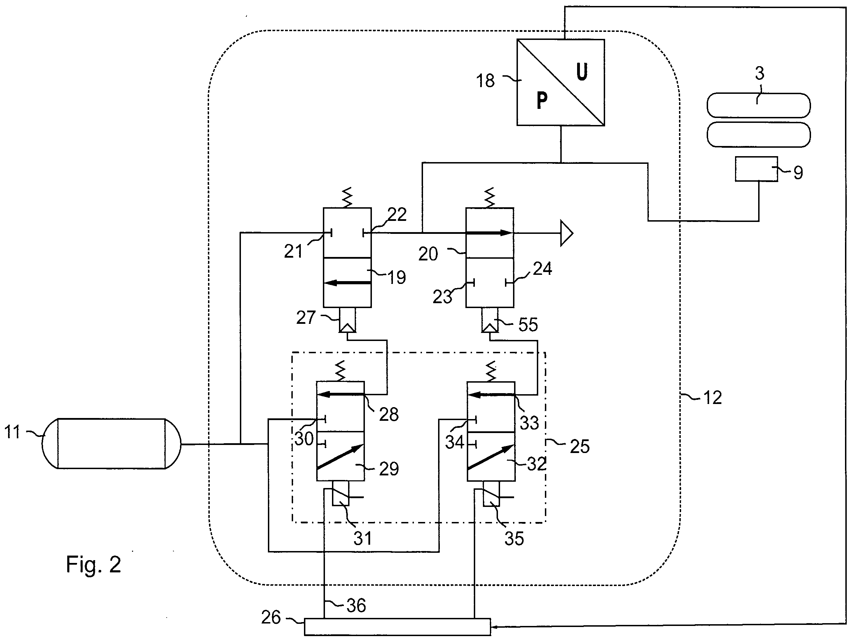

Fig. 2 zeigt ein pneumatisches Schaubild eines Radbremsmoduls 12. Für jeweils gleiche Bauteile sind dabei die gleichen Bezugszeichen wie in Fig. 1 verwendet.

Das Radbremsmodul 12 kontrolliert die fluidische Verbindung einer Radbremse 9 eines Rades 3 mit einem Vorratsdruckspeicher 11 und weist ein Belüftungsventil 19 und ein Entlüftungsventil 20 auf. Das Belüftungsventil 19 steuert in geöffnetem Zustand den pneumatischen Druck aus dem Vorratsdruckspeicher 11 direkt zu der Radbremse 9 durch. Das Belüftungsventil 19 und das Entlüftungsventil 20 sind im gezeigten Ausführungsbeispiel als 2/2-Wege Ventile ausgebildet und somit jeweils zwischen einer geöffneten und einer geschlossenen Stellung schaltbar. Das Belüftungsventil 19 weist einen Versorgungsanschluss 21 auf, welcher in der geöffneten Stellung des Belüftungsventils mit einem Arbeitsanschluss 22 verbunden ist. In entsprechender Bauweise umfasst das Entlüftungsventil einen Versorgungsanschluss 23, welcher zur Entlüftung der Radbremse 9 mit dem Arbeitsanschluss 24, welcher in die Atmosphäre mündet, verbindbar ist.

Der Versorgungsanschluss 21 des Belüftungsventils 19 ist an den Vorratsdruckspeicher 11 angeschlossen, das heißt, es besteht eine direkte fluidische Verbindung. Der Arbeitsanschluss 22 des Belüftungsventils 19 kommuniziert direkt mit der Radbremse 9, wodurch eine direkte Durchsteuerung in geöffnetem Zustand des Belüftungsventils 19 gewährleistet ist.

Jedes Radbremsmodul 12 umfasst außerdem elektrisch betätigbare Aktivierungsmittel 25 zur Aktivierung des Belüftungsventils 19 und/oder des Entlüftungsventils 20. Das Belüftungsventil 19 ist daher mittelbar über eine elektrische Betätigung aktivierbar, wodurch der pneumatische Druck des Vorratsdruckspeichers 11 zur Radbremse 9 direkt durchgesteuert wird. Zur Erzeugung eines Stellsignals 36 für das Aktivierungsmittel 25 entsprechend dem Vorgabewert für den Soll-Bremsdruck ist dem Radbremsmodul 12 eine Steuerlogik 26 zugeordnet. Die Steuerlogik 26 ist dabei individuell für jedes Radbremsmodul 12 jedes Rades 3 vorgesehen. Der Steuerlogik 26 wird der Ist-Wert des Bremsdrucks in der Druckmittelleitung 10 zur Radbremse 9 von dem Drucksensor 18 laufend vorgegeben.

Die Elektronik der Steuerlogik 26 kann in einem Ausführungsbeispiel in dem Radbremsmodul untergebracht sein. In weiteren Ausführungsbeispielen umfasst die elektronische Steuereinheit 17 (Fig. 1) elektronische Ausstattungen für die Steuerlogiken 26 der angeschlossenen Radbremsmodule 12, 13. In sämtlichen der vorgenannten Ausführungsbeispielen ist ein gegenseitiger Informationsaustausch, insbesondere die Übertragung von Stellsignalen und Sensorsignalen über ein Bus-System (CAN) möglich.

Das Belüftungsventil 19 und das Entlüftungsventil 20 sind als pneumatisch betätigbare Ventile ausgebildet. Als Aktivierungsmittel 25 ist im bevorzugten Ausführungsbeispiel gemäß Fig. 2 jeweils ein elektrisch betätigbares Vorsteuerventil vorgesehen. An einen pneumatischen Steuereingang 27 des Belüftungsventils 19 ist der Arbeitsanschluss 28 eines Belüftungs-Vorsteuerventils 29 angeschlossen. Der Versorgungsanschluss 30 des Belüftungs-Vorsteuerventils 29 kommuniziert mit einem pneumatischen Druckvorrat, im gezeigten Ausführungsbeispiel dem Vorratsdruckspeicher 11.

Der elektrische Steuereingang 31 des Belüftungs-Vorsteuerventils ist von der Steuerlogik 26 über ein entsprechendes elektrisches Stellsignal beaufschlagbar. Wird das Belüftungs-Vorsteuerventil 29 geöffnet, so verbindet das Belüftungs-Vorsteuerventil 29 den Vorratsdruckspeicher 11 mit dem pneumatischen Steuereingang 27 des Belüftungsventils 19 und sorgt für eine direkte Durchschaltung des pneumatischen Drucks aus dem Vorratsdruckspeicher 11 zur Radbremse 9.

Das Aktivierungsmittel des Entlüftungsventils 20 umfasst ein elektrisch betätigbares Entlüftungs-Vorsteuerventil 32, dessen Arbeitsanschluss 33 auf den pneumatischen Steuereingang 55 des Entlüftungsventils 20 wirkt. Ein Versorgungsanschluss 34 des Entlüftungs-Vorsteuerventil 32 ist wie auch das andere Vorsteuerventil des Aktivierungsmittels 25 an den Vorratsdruckspeicher 11 angeschlossen. Der elektrische Steuereingang 35 des Entlüftungs-Vorsteuerventils 32 ist über die Steuerlogik 26 ansteuerbar.

In weiteren Ausführungsbeispielen sind als elektrisch betätigbare Aktivierungseinrichtungen dem Belüftungsventil 19 und/oder dem Entlüftungsventil 20 Schrittmotoren zur Betätigung zugeordnet.

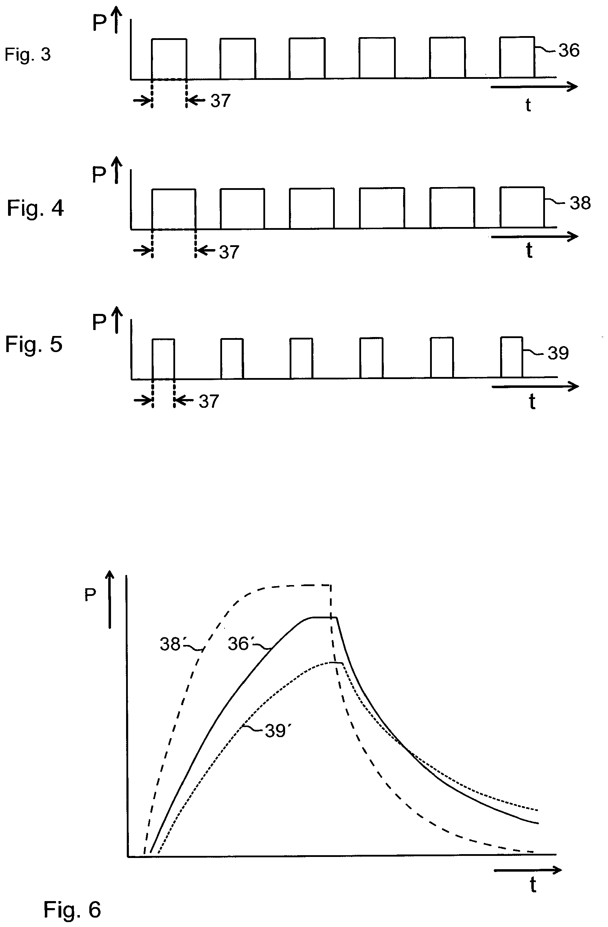

Die Steuerlogik 26 erzeugt ein pulsmoduliertes Stellsignal für das Belüftungs-Vorsteuerventil 29. In dem Ausführungsbeispiel werden die Radbremsmodule 12, 13 über pulsweiten modulierte Stellsignale betätigt. Beispiele für die zeitlichen Verläufe derartiger pulsweiten modulierter Stellsignale sind in den Fig. 3 bis 5 dargestellt. Fig. 3 zeigt dabei ein Ausführungsbeispiel eines pulsweiten modulierten Stellsignals 36 mit einer vorgegebenen Pulsweite 37. In Fig. 4 ist der zeitliche Verlauf eines Stellsignals 38 mit einer gegenüber dem Stellsignal 36 in Fig. 3 vergrößerten Pulsweite 37 dargestellt. Bei dem zeitlichen Verlauf des Stellsignals 39 gemäß Fig. 5 ist die Pulsweite 37 gegenüber dem Stellsignal 36 in Fig. 3 verringert.

Ein pulsweitenmoduliertes Stellsignal ermöglicht mit einer bestimmten Pulsweite einen raschen Druckaufbau in der jeweiligen Radbremse. Der Einfluss der Veränderung der Pulsweite 37 ist in den zeitlichen Verlaufen des Druckaufbaus in Fig. 6 dargestellt. Bei einem Stellsignal 38 mit vergrößerter Pulsweite ergibt sich ein steilerer Gradient des Druckaufbaus und ein insgesamt rascher Druckaufbau als bei einer geringen Pulsweite. Durch Veränderung der Pulsweite im Stellsignal eines Radbremsmoduls kann daher der zeitliche Verlauf des Druckaufbau und auch die Dimension des Bremsdrucks entsprechend einem Soll-Bremsdruck beeinflusst und insbesondere geregelt werden.

Die für die konkrete Bremssituation optimale Pulsweite wird von der Steuerlogik laufend bestimmt. Das Pulsschema mit bestimmter Pulsbreite entsprechend einem bestimmten Druckanstiegsverhalten wird im Betrieb der Bremseinrichtung wie nachfolgend dargestellt ermittelt.

Fig. 7 zeigt ein Blockschaltbild zum Betrieb der pneumatischen Bremseinrichtung. Die elektronische Steuereinheit 17 (Fig. 1) ermittelt in einem Vorgabeschritt 40 Vorgabewerte 41 der Soll-Bremsdrücke der Radbremsen unter Berücksichtigung des Bremssignalgebers 14, welcher der Steuereinheit sein Bremssignal 15 zuführt.

Der Vorgabewert 41 für den Soll-Bremsdruck wird zu einem Ist-/SollwertVergleich 43 heran gezogen, wobei mit dem Ist-Wert 44 des Bremsdrucks in der Radbremse, welcher von dem Drucksensor 18 laufend gemessen wird, und dem Soll-Wert des Bremsdrucks eine Regelabweichung 45 ermittelt wird. Die Regelabweichung 45 wird einem Regler 46 vorgegeben, welcher unter Berücksichtigung der Modulation 42 des pulsweitenmodulierte Stellsignals 36 erzeugt. Ein Regeleingriff zur Angleichung des Ist-Werts 44 des Bremsdrucks an den Soll-Wert erfolgt durch Variation der Pulsweite des Stellsignals 36. Mit dem Stellsignal 36 wird das Vorsteuer-Belüftungsventil 29 des jeweiligen Radbremsmoduls 12 (Fig. 2) angesteuert. Ein ähnlicher Regelkreis ist zur Regelung des Soll-Bremsdrucks des anderen Radbremsmoduls 13 der Vorderachse des Lastkraftfahrzeugs vorgesehen.

Der Regelkreis zum Angleich des Ist-Werts 44 des Bremsdrucks an den Soll-Wert ist Bestandteil der Steuerlogik des jeweiligen Radbremsmoduls 12, 13. Jeder Steuerlogik 26 (Fig. 2) des jeweiligen Radbremsmoduls 12, 13 ist ein im Voraus für das jeweilige Radbremsmodul ermitteltes Kennfeld 47 zugeordnet, welches Informationen zu zeitdiskreten Signalfolgen für das Stellsignal 36 in Abhängigkeit von Soll-Bremsdrücken umfasst. Das Kennfeld 47 ist das Resultat eines Einlernvorgangs des Radbremsmoduls, welches vor der ersten Systeminitialisierung ermittelt wird, beispielsweise durch Prüfstandsversuche. Dabei wird das jeweilige Radbremsmodul 12, 13 für bestimmte Soll-Bremsdrücke optimale Pulsschemata für das pulsweiten modulierte Stellsignal ermittelt. Die Pulsschemata verschiedener Radbremsmodule weichen dabei in der Regel von einander ab, da beim Einlernen geometrische Einflussfaktoren wie Zylindergrößen oder Verrohrung berücksichtigt werden und individuell für die Radbremsmodule optimierte Kennfelder eingelernt werden. Die optimierten Pulsschemata für die jeweiligen Soll-Bremsdrücke werden als Vorgabeparameter als Kennfeld abgespeichert, beispielsweise in einem EEPROM.

Bei der ersten Initialisierung des jeweiligen Radbremsmoduls, das heißt zu Beginn des Bremsvorgangs, wird ein Pulsschema aus dem jeweiligen Kennfeld 47 des Radbremsmoduls ausgelesen und ein entsprechendes pulsweitenmoduliertes Stellsignal 36 erzeugt. Wird bei der Einregelung des Bremsdrucks eine Regelabweichung 45 festgestellt, so wird durch Variation der Pulsbreite der gewünschte Soll-Bremsdruck eingeregelt.

Durch die Regelung des Soll-Bremsdrucks wird effektiv einer Neigung des Kraftfahrzeugs zum Schiefziehen während des Bremsvorgangs entgegengewirkt.

Um auch einen zeitlichen Versatz der Bremseingriffe beider Radbremsmodule auszugleichen, ist wenigstens ein überlagerter Regelkreis 48 zur Berechnung und Anpassung der Vorgabewerte für den Soll-Bremsdruck unter Berücksichtigung einer laufend ermittelbaren Fahrzustandsgröße 49 vorgesehen. Die laufend ermittelte Fahrzustandsgröße 49 ist dabei ein Parameter, welcher die Bewegung des Lastkraftfahrzeugs charakterisiert. In einem Ausführungsbeispiel der Erfindung ist ein überlagerter Regelkreis 48 vorgesehen, welcher eine gemessene Raddrehzahl als Fahrzustandsgröße berücksichtigt. Die Raddrehzahl wird dabei durch eine Sensoreinrichtung (Fig. 1) bereitgestellt, welcher aus einem mit dem Vorderrad 4 umlaufenden Polrad 51 und ein mit dem Polrad 51 zusammenwirkenden Sensor 52 besteht. Alternativ oder zusätzlich ist ein überlagerter Regelkreis vorgesehen, welcher eine Gierrate des Kraftfahrzeugs als Fahrzustandsgröße berücksichtigt. In weiteren Ausführungsbeispielen sind mehrere überlagerte Regelkreise mit unterschiedlichen Fahrzustandsgrößen vorgesehen, wodurch das Auftreten von Tendenzen des Kraftfahrzeugs zum Schiefziehen quasi ausgeschlossen werden.

In dem überlagerten Regelkreis 48 oder in jedem der vorgesehenen überlagerten Regelkreise wird aus dem vorgegebenen Messwert der Fahrzustandsgröße 49 und einem Soll-Wert eine Regelabweichung gebildet beziehungsweise ein Korrekturfaktor 53, mit dem der Vorgabewert 41 an die jeweils vorliegende dynamische Fahrsituation angepasst werden kann. Der Soll-Wert 54, welcher zum Vergleich mit der gemessenen Fahrzustandsgröße 49 herangezogen wird, kann aus einem Speicherelement vorgegeben werden oder wird durch Vergleich mit der korrespondieren Messgröße des jeweils anderen Radbremsmoduls hergeleitet.

Für den Fall, dass keine gemessenen Ist-Werte 44 des Bremsdrucks (Fig. 7) vorliegen, wird der Ist-Druck aus dem Radbremsmodul eines anderen Rades für die Regelung des Bremsdrucks herangezogen. Hierzu sind die Drucksensoren 18 der jeweiligen Radbremsmodule 12, 13 miteinander signalübertragend vernetzt. In dem Fall, dass von keinem der Räder 3,4 des Kraftfahrzeugs ein Ist-Wert des Bremsdrucks erfassbar ist, beispielsweise bei einem Ausfall sämtlicher Drucksensoren 18, ist vorgesehen, dass die Radbremsmodule 12, 13 den Bremsdruck in ihren jeweiligen Radbremsen auf der Grundlage des Vorgabewerts des Soll-Bremsdrucks steuern. Auch im Fall einer Steuerung des Bremsdrucks der jeweiligen Radbremse wird einer etwaigen Schiefziehneigung durch die überlagerten Regelkreise 48 entgegengewirkt.

### Bezugszeichenliste (Bestandteil der Beschreibung)

1 - Bremseinrichtung
2 - Lastkraftfahrzeug
3 - linkes Vorderrad
4 - rechtes Vorderrad
5 - Vorderachse
6 - linkes Hinterrad
7 - rechtes Hinterrad
8 - Hinterachse
9 - Radbremse
10 - Druckmittelleitung
11 - Vorratsdruckspeicher
12 - Erstes Radbremsmodul (links)
13 - Zweites Radbremsmodul (rechts)
14 - Bremssignalgeber
15 - Bremssignal
16 - Bremssignalleitung
17 - elektronische Steuereinheit
18 - Drucksensor
19 - Belüftungsventil
20 - Entlüftungsventil
21 - Versorgungsanschluss
22 - Arbeitsanschluss
23 - Versorgungsanschluss
24 - Arbeitsanschluss
25 - Aktivierungsmittel
26 - Steuerlogik
27 - Steuereingang
28 - Arbeitsanschluss
29 - Belüftungs-Vorsteuerventil
30 - Versorgungsanschluss
31 - elektrischer Steuereingang
32 - Entlüftungs-Vorsteuerventil
33 - Arbeitsanschluss
34 - Versorgungsanschluss
35 - elektrischer Steuereingang
36 - Stellsignal
37 - Pulsweite
38 - Stellsignal
39 - Stellsignal
40 - Vorgabeschritt
41 - Vorgabewert
42 - Modulation
43 - Ist/Soll-Wertvergleich
44 - Ist-Wert Bremsdruck
45 - Regelabweichung
46 - Regler
47 - Kennfeld
48 - Überlagerter Regelkreis
49 - Fahrzustandsgröße
51 - Polrad
52 - Sensor
53 - Korrekturwert
54 - Soll-Wert
55 - pneumatischer Steuereingang

## Patentansprüche

1. Pneumatische Bremseinrichtung für Kraftfahrzeuge (2), enthaltend einen Bremssignalgeber (14), einen Vorratsdruckspeicher (11) und eine pneumatisch betätigbare Radbremse (9) pro Rad (3, 4) sowie wenigstens eine Achse (5) des Kraftfahrzeugs (2) mit jeweils einem elektrisch ansteuerbaren Radbremsmodul (12, 13) pro Rad (3, 4) zur Einstellung eines Soll-Bremsdrucks der jeweiligen Radbremse (9), sowie mit einer elektronischen Steuereinheit ( 17) zur Ermittlung von Vorgabewerten (41) der Soll-Bremsdrücke der Radbremsen (9) unter Berücksichtigung des Bremssignalgebers (14), welche den Radbremsmodulen (12, 13) vorgebbar sind, wobei jedes Radbremsmodul (12, 13) umfasst:
- wenigstens ein Belüftungsventil (19) und ein Entlüftungsventil (20), ein elektrisch betätigbares Aktivierungsmittel (25) zur Aktivierung des Belüftungsventils (19) und/oder des Entlüftungsventils (20),
- eine Steuerlogik (26) mit Mitteln zur Erzeugung eines Stellsignals (36) für das Aktivierungsmittel (25) entsprechend dem Vorgabewert (41) für den Soll-Bremsdruck, **dadurch gekennzeichnet, dass** das Belüftungsventil (19) und sein Aktivierungsmittel derart ausgebildet sind, dass der pneumatische Druck aus dem Vorratsdruckspeicher (11) im betätigten Zustand des Belüftungsventils (19) direkt an die jeweilige Radbremse (9) durchsteuerbar ist und/oder das Entlüftungsventil (20) den Bremsdruck an der Radbremse (9) im betätigten Zustand direkt in die Atmosphäre entlüftet.

2. Bremseinrichtung nach Anspruch 1, **dadurch gekennzeichnet, dass** das Aktivierungsmittel des Belüftungsventils (19) ein elektrisch betätigbares Belüftungs-Vorsteuerventil (29) umfasst, mittels dem das Belüftungsventil (19) betätigbar ist.

3. Bremseinrichtung nach Anspruch 2, **dadurch gekennzeichnet, dass** die Steuerlogik (26) des Radbremsmoduls (12, 13) Mittel zur Erzeugung eines pulsmodulierten Stellsignals (36) für das Belüftungs-Vorsteuerventil (29) umfasst, wobei der Steuerlogik (26) jedes Radbremsmoduls (12, 13) ein im Voraus für das jeweilige Radbremsmodul (12, 13) ermitteltes Kennfeld (47) zugeordnet ist, welches Information zu zeitdiskreten Signalfolgen für das Stellsignal (36) in Abhängigkeit von Soll-Bremsdrücken umfasst.

4. Bremseinrichtung nach Anspruch 3, **dadurch gekennzeichnet, dass** die Steuerlogik (26) für die Aktivierungsmittel als Regelkreis zur Einregelung des Soll-Bremsdrucks ausgebildet ist, welcher das Sensorsignal eines Drucksensors (18) in einer Druckmittelleitung (10) zwischen dem Belüftungsventil (19) und der Radbremse (9) als Ist-Bremsdruck (44) berücksichtigt.

5. Bremseinrichtung nach Anspruch 3 oder 4, **gekennzeichnet durch** pulsweitenmodulierte Stellsignale (36, 38, 39).

6. Bremseinrichtung nach einem der vorhergehenden Ansprüche, **gekennzeichnet durch** wenigstens einen überlagerten Regelkreis (48) zur Berechnung und Anpassung der Vorgabewerte (41) für den Soll-Bremsdruck unter Berücksichtigung einer laufend ermittelbaren Fahrzustandsgröße (49).

7. Bremseinrichtung nach Anspruch 6, **gekennzeichnet durch** einen überlagerten Regelkreis (48), welcher eine gemessene Raddrehzahl als Fahrzustandsgröße (49) berücksichtigt.

8. Bremseinrichtung nach Anspruch, **gekennzeichnet durch** einen überlagerten Regelkreis, welcher eine Gierrate des Kraftfahrzeugs (2) als Fahrzustandsgröße (49) berücksichtigt.

9. Bremseinrichtung nach einem der vorhergehenden Ansprüche, **dadurch gekennzeichnet, dass** das Aktivierungsmittel des Entlüftungsventils (20) ein elektrisch betätigbares Entlüftungs-Vorsteuerventil (32) umfasst, mittels dem das Entlüftungsventil (20) aktivierbar ist, wobei die Steuerlogik (26) des Radbremsmoduls (12, 13) Mittel zur Erzeugung eines pulsmodulierten Stellsignals für das Entlüftungs-Vorsteuerventil (32) umfasst.

10. Verfahren zum Betrieb einer pneumatischen Bremseinrichtung nach einem der Ansprüche 1 bis 9, wobei elektrisch ansteuerbare Radbremsmodule (12, 13) an jedem Rad (3, 4) wenigstens einer Achse (5) des Kraftfahrzeugs (2) einen Soll-Bremsdruck der Radbremse (9) des jeweiligen Rades (3, 4) einstellen, wobei Vorgabewerte (41) der Soll-Bremsdrücke der Radbremsen (9) unter Berücksichtigung eines Bremssignalgebers (14) ermittelt werden, wobei Belüftungsventile (19) und Entlüftungsventile (20) der Radbremsmodule durch elektrisch betätigbare Aktivierungsmittel aktiviert werden, wobei eine Steuerlogik (26) Stellsignale (36, 38,39) für das Aktivierungsmittel entsprechend dem Vorgabewert (41) für den Soll-Bremsdruck erzeugt, **dadurch gekennzeichnet, dass** das Belüftungsventil (19) durch ein elektrisch betätigtes Aktivierungsmittel (25) betätigt wird und im betätigten Zustand den pneumatischen Druck aus einem Vorratsdruckspeicher (11) direkt an die jeweilige Radbremse (9) durchsteuert und/oder das Entlüftungsventil (20) den Bremsdruck der Radbremse (9) im betätigten Zustand direkt in die Atmosphäre entlüftet.

11. Verfahren nach Anspruch 11, **dadurch gekennzeichnet, dass** ein elektrisch betätigtes Belüftungs-Vorsteuerventil (29) das Belüftungsventil (19) vorsteuert.

12. Verfahren nach Anspruch 11, **dadurch gekennzeichnet, dass** das Belüftungs-Vorsteuerventil (29) mit einem pulsmodulierten Stellsignal (36, 38, 39) der Steuerlogik (26) betätigt wird, wobei Information zu zeitdiskreten Signalfolgen für das Stellsignal (36) einem im Voraus für das jeweilige Radbremsmodul (12, 13) ermittelten Kennfeld (47) in Abhängigkeit von Soll-Bremsdrücken entnommen werden.

13. Verfahren nach Anspruch 12, **dadurch gekennzeichnet, dass** das Belüftungs-Vorsteuerventil (29)über ein pulsweitenmoduliertes Stellsignal (36) betätigt wird.

14. Verfahren nach Anspruch 12 oder 134, **dadurch gekennzeichnet, dass** der Soll-Bremsdruck unter Berücksichtigung eines gemessenen Ist-Werts (44) des Bremsdrucks über Variation der zeitdiskreten Signalfolge des Stellsignals (36, 38, 39) geregelt wird.

15. Verfahren nach einem der Ansprüche 10 bis 14, **dadurch gekennzeichnet, dass** die Vorgabewerte (41) in wenigstens einem überlagerten Regelkreis (48) unter Berücksichtigung einer Fahrzustandsgröße (49) berechnet und angepasst werden.

16. Verfahren nach einem der Ansprüche 10 bis 15, **dadurch gekennzeichnet, dass** in dem Fall, dass keine gemessenen Ist-Werte (44) des Bremsdrucks eines bestimmten Rades vorliegen, der Ist-Druck (44) aus dem Radbremsmodul (12, 13) eines anderen Rades (3, 4) für die Regelung des Bremsdrucks herangezogen wird.

17. Verfahren nach Anspruch 16, **dadurch gekennzeichnet, dass** in dem Fall, dass von keinem Rad (3, 4) ein Ist-Wert (44) des Bremsdrucks erfasst wird, der Bremsdruck auf der Grundlage des Vorgabewerts (41) des Soll-Bremsdrucks gesteuert wird.

## Claims

1. Pneumatic brake device for motor vehicles (2), comprising a brake signal transducer (14), a supply pressure accumulator (11) and one pneumatically actuable wheel brake (9) per wheel (3, 4), and at least one axle (5) of the motor vehicle (2) with in each case one electrically actuable wheel brake module (12, 13) per wheel (3, 4) for setting a setpoint brake pressure of the respective wheel brake (9), and with an electronic control unit (17) for determining standard values (41) of the setpoint brake pressures of the wheel brakes (9) with consideration of the brake signal transducer (14), which standard values (41) can be specified for the wheel brake modules (12, 13), each wheel brake module (12, 13) comprising:
- at least one aeration valve (19) and one deaeration valve (20),
- an electrically actuable activation means (25) for the activation of the aeration valve (19) and/or of the deaeration valve (20),
- a control logic means (26) with means for the generation of an actuating signal (36) for the activation means (25) in accordance with the standard value (41) for the setpoint brake pressure, **characterized in that** the aeration valve (19) and its activation means are configured in such a way that the pneumatic pressure from the supply pressure accumulator (11) can be passed through directly to the respective wheel brake (9) in the actuated state of the aeration valve (19), and/or the deaeration valve (20) ventilates the brake pressure at the wheel brake (9) directly to atmosphere in the actuated state.

2. Brake device according to Claim 1, **characterized in that** the activation means of the aeration valve (19) comprises an electrically actuable aeration pilot control valve (29), by means of which the aeration valve (19) can be actuated.

3. Brake device according to Claim 2, **characterized in that** the control logic means (26) of the wheel brake module (12, 13) comprises means for the generation of a pulse modulated actuating signal (36) for the aeration pilot control valve (29), the control logic means (26) of each wheel brake module (12, 13) being assigned a characteristic diagram (47) which is determined in advance for the respective wheel brake module (12, 13) and comprises information with respect to time-discrete signal sequences for the actuating signal (36) in a manner which is dependent on setpoint brake pressures.

4. Brake device according to Claim 3, **characterized in that** the control logic means (26) for the activation means is configured as a control loop for the adjustment of the setpoint brake pressure, which control loop takes into consideration the sensor signal of a pressure sensor (18) in a pressure medium line (10) between the aeration valve (19) and the wheel brake (9) as actual brake pressure (44).

5. Brake device according to Claim 3 or 4, **characterized by** pulse width modulated actuating signals (36, 38, 39).

6. Brake device according to one of the preceding claims, **characterized by** at least one superimposed control loop (48) for the calculation and adaptation of the standard values (41) for the setpoint brake pressure with consideration of a driving state variable (49) which can be determined continuously.

7. Brake device according to Claim 6, **characterized by** a superimposed control loop (48) which takes into consideration a measured wheel rotational speed as driving state variable (49).

8. Brake device according to Claim 6, **characterized by** a superimposed control circuit which takes into consideration a yaw rate of the motor vehicle (2) as driving state variable (49).

9. Brake device according to one of the preceding claims, **characterized in that** the activation means of the deaeration valve (20) comprises an electrically actuable deaeration pilot control valve (32), by means of which the deaeration valve (20) can be activated, the control logic means (26) of the wheel brake module (12, 13) comprising means for the generation of a pulse modulated actuating signal for the deaeration pilot control valve (32) .

10. Method for the operation of a pneumatic brake device according to one of Claims 1 to 9, electrically actuable wheel brake modules (12, 13) at each wheel (3, 4) of at least one axle (5) of the motor vehicle (2) setting a setpoint brake pressure of the wheel brake (9) of the respective wheel (3, 4), standard values (41) of the setpoint brake pressures of the wheel brakes (9) being determined with consideration of a brake signal transducer (14), aeration valves (19) and deaeration valves (20) of the wheel brake modules being activated by way of electrically actuable activation means, a control logic means (26) generating actuating signals (36, 38, 39) for the activation means in accordance with the standard value (41) for the setpoint brake pressure, **characterized in that** the aeration valve (19) is actuated by way of an electrically actuated activation means (25) and, in the actuated state, passes through the pneumatic pressure from a supply pressure accumulator (11) directly to the respective wheel brake (9), and/or the deaeration valve (20) ventilates the brake pressure of the wheel brake (9) directly to the atmosphere in the actuated state.

11. Method according to Claim 10, **characterized in that** an electrically actuated aeration pilot control valve (29) pilot controls the aeration valve (19).

12. Method according to Claim 11, **characterized in that** the aeration pilot control valve (29) is actuated by way of a pulse modulated actuating signal (36, 38, 39) of the control logic means (26), information with respect to time-discrete signal sequences for the actuating signal (36) being gathered from a characteristic diagram (47) which is determined in advance for the respective wheel brake module (12, 13), in a manner which is dependent on setpoint brake pressures.

13. Method according to Claim 12, **characterized in that** the aeration pilot control valve (29) is actuated via a pulse width modulated actuating signal (36).

14. Method according to Claim 12 or 13, **characterized in that** the setpoint brake pressure is regulated via a variation of the time-discrete signal sequence of the actuating signal (36, 38, 39) with consideration of the measured actual value (44) of the brake pressure.

15. Method according to one of Claims 10 to 14, **characterized in that** the standard values (41) are calculated and adapted in at least one superimposed control loop (48) with consideration of a driving state variable (49).

16. Method according to one of Claims 10 to 15, **characterized in that**, in the case where there are no measured actual values (44) of the brake pressure of a defined wheel, the actual pressure (44) from the wheel brake module (12, 13) of another wheel (3, 4) is used for the regulation of the brake pressure.

17. Method according to Claim 16, **characterized in that**, in the case where an actual value (44) of the brake pressure is not determined from any wheel (3, 4), the brake pressure is controlled on the basis of the standard value (41) of the setpoint brake pressure.

## Revendications

1. Système de frein pneumatique pour véhicules automobiles (2), comprenant un générateur de signal de frein (14), un accumulateur de pression de réserve (11) et un frein de roue (9) à commande pneumatique pour chaque roue (3, 4) ainsi qu'au moins un essieu (5) du véhicule automobile (2) comprenant à chaque fois un module de frein de roue à commande électrique (12, 13) pour chaque roue (3, 4) pour l'ajustement d'une pression de frein de consigne du frein de roue respectif (9), ainsi qu'une unité de commande électronique (17) pour déterminer des valeurs prédéfinissables (41) des pressions de frein de consigne des freins de roues (9) en tenant compte du générateur de signal de frein (14), lesquelles valeurs prédéfinissables peuvent être prédéfinies pour les modules de frein de roue (12, 13), chaque module de frein de roue (12, 13) comprenant :
- au moins une soupape de ventilation (19) et une soupape de désaérage (20),
- un moyen d'activation à commande électrique (25) pour activer la soupape de ventilation (19) et/ou la soupape de désaérage (20),
- une logique de commande (26) comprenant des moyens pour générer un signal de commande (36) pour le moyen d'activation (25), correspondant à la valeur prédéfinissable (41) pour la pression de frein de consigne, **caractérisé en ce que** la soupape de désaérage (20) et son moyen d'activation sont réalisés de telle sorte que la pression pneumatique peut être commandée à partir de l'accumulateur de pression de réserve (11) dans l'état actionné de la soupape de ventilation (19), directement vers le frein de roue respectif (9) et/ou la soupape de désaérage (20) évacue la pression de frein au niveau du frein de roue (9) dans l'état actionné directement vers l'atmosphère.

2. Système de frein selon la revendication 1, **caractérisé en ce que** le moyen d'activation de la soupape de ventilation (19) comprend une soupape pilote de ventilation à commande électrique (29) au moyen de laquelle la soupape de ventilation (19) peut être actionnée.

3. Système de frein selon la revendication 2, **caractérisé en ce que** la logique de commande (26) du module de frein de roue (12, 13) comprend des moyens pour générer un signal de commande à modulation d'impulsion (36) pour la soupape pilote de ventilation (29), la logique de commande (26) de chaque module de frein de roue (12, 13) étant associée à un champ caractéristique (47) déterminé au préalable pour le module de frein de roue respectif (12, 13), lequel champ caractéristique comprend des informations concernant des successions de signaux distinctes dans le temps pour le signal de commande (36) en fonction de pressions de frein de consigne.

4. Système de frein selon la revendication 3, **caractérisé en ce que** la logique de commande (26) pour les moyens d'activation est réalisée sous forme de circuit de réglage pour ajuster la pression de frein de consigne, lequel tient compte du signal de capteur d'un capteur de pression (18) dans une conduite de milieu sous pression (10) entre la soupape de ventilation (19) et le frein de roue (9) en tant que pression de frein actuelle (44) .

5. Système de frein selon la revendication 3 ou 4, **caractérisé par** des signaux de commande à modulation de largeur d'impulsion (36, 38, 39).

6. Système de freinage selon l'une quelconque des revendications précédentes, **caractérisé par** au moins un circuit de réglage superposé (48) pour calculer et adapter les valeurs prédéfinissables (41) pour la pression de frein de consigne en tenant compte d'une grandeur d'état de conduite (49) pouvant être déterminée en continu.

7. Système de frein selon la revendication 6, **caractérisé par** un circuit de réglage superposé (48) qui tient compte d'une vitesse de rotation des roues mesurée en tant que grandeur d'état de conduite (49).

8. Système de frein selon la revendication 6, **caractérisé par** un circuit de réglage superposé qui tient compte d'une vitesse de lacet du véhicule automobile (2) en tant que grandeur d'état de conduite (49).

9. Système de frein selon l'une quelconque des revendications précédentes, **caractérisé en ce que** le moyen d'activation de la soupape de désaérage (20) comprend une soupape pilote de désaérage (32) à commande électrique au moyen de laquelle la soupape de désaérage (20) peut être activée, la logique de commande (26) du module de frein de roue (12, 13) comprenant des moyens pour générer un signal de commande à modulation d'impulsion pour la soupape pilote de désaérage (32).

10. Procédé de fonctionnement d'un système de frein pneumatique selon l'une quelconque des revendications 1 à 9, dans lequel des modules de freins de roues à commande électrique (12, 13) ajustent, au niveau de chaque roue (3, 4) d'au moins un essieu (5) du véhicule automobile (2), une pression de frein de consigne du frein de roue (9) de la roue respective (3, 4), des valeurs prédéfinissable (41) des pressions de frein de consigne des freins de roues (9) étant déterminées en tenant compte d'un générateur de signal de frein (14), des soupapes de ventilation (19) et des soupapes de désaérage (20) des modules de freins de roues étant activées par des moyens d'activation à commande électrique, une logique de commande (26) générant des signaux de commande (36, 38, 39) pour le moyen d'activation, correspondant à la valeur prédéfinissable (41) pour la pression de frein de consigne, **caractérisé en ce que** la soupape de ventilation (19) est actionnée par un moyen d'activation (25) à commande électrique et, dans l'état actionné, commande la pression pneumatique provenant d'un accumulateur de pression de réserve (11) directement vers le frein de roue respectif (9) et/ou la soupape de désaérage (20) évacue la pression de freinage du frein de roue (9) dans l'état actionné directement vers l'atmosphère.

11. Procédé selon la revendication 10, **caractérisé en ce qu'**une soupape pilote de ventilation (29) à commande électrique pilote la soupape de ventilation (19) .

12. Procédé selon la revendication 11, **caractérisé en ce que** la soupape pilote de ventilation (29) est actionnée par un signal de commande à modulation d'impulsion (36, 38, 39) de la logique de commande (26), des informations concernant des successions de signaux distinctes dans le temps pour le signal de commande (36) étant prélevées d'un champ caractéristique (47) déterminé à l'avance pour le module de frein de roue respectif (12, 13) en fonction de pressions de frein de consigne.

13. Procédé selon la revendication 12, **caractérisé en ce que** la soupape pilote de ventilation (29) est actionnée par le biais d'un signal de commande à modulation de largeur d'impulsion (36).

14. Procédé selon la revendication 12 ou 13, **caractérisé en ce que** la pression de frein de consigne est régulée en tenant compte d'une valeur actuelle mesurée (44) de la pression de frein par le biais d'une variation de la succession de signaux distincte dans le temps du signal de commande (36, 38, 39).

15. Procédé selon l'une quelconque des revendications 10 à 14, **caractérisé en ce que** les valeurs prédéfinissables (41) sont calculées et adaptées dans au moins un circuit de réglage superposé (48) en tenant compte d'une grandeur d'état de conduite (49) .

16. Procédé selon l'une quelconque des revendications 10 à 15, **caractérisé en ce que** dans le cas où aucune valeur actuelle mesurée (44) de la pression de freinage d'une roue déterminée n'est présente, la pression actuelle (44) provenant du module de frein de roue (12, 13) d'une autre roue (3, 4) est utilisée pour la régulation de la pression de freinage.

17. Procédé selon la revendication 16, **caractérisé en ce que** dans le cas où une valeur actuelle (44) de la pression de freinage n'est détectée sur aucune roue (3, 4), la pression de freinage est commandée sur la base de la valeur prédéfinissable (41) de la pression de frein de consigne.
